# EUROPÄISCHE PATENTSCHRIFT

(11) **EP 2 905 182 B1**
(45) Veröffentlichungstag und Bekanntmachung des Hinweises auf die Patenterteilung: **03.05.2017**
(21) Anmeldenummer: 15151077.3
(22) Anmeldetag: 14.01.2015
(51) Int. Cl.: B60R 16/02, B60R 25/0215, H02G 3/22, H02G 3/08, H02G 3/06

(54) **Leitungsverbindungsanordnung für ein Fahrzeugbauteil**
Line connection assembly for a vehicle component
Système de liaison de conduite pour un composant de véhicule

(30) Priorität: 07.02.2014 DE 102014101579
(43) Veröffentlichungstag der Anmeldung: 12.08.2015
(73) Patentinhaber: Huf Hülsbeck & Fürst GmbH & Co. KG, 42551 Velbert (DE)
(72) Erfinder: Pieper, Friedrich, 84513 Töging (DE); Pieronczyk, Martin, 85221 Dachau (DE)
(74) Vertreter: Zenz Patentanwälte Partnerschaft mbB

(56) Entgegenhaltungen:
- EP-A1- 0 521 751
- EP-A1- 2 020 701
- DE-A1- 10 245 808
- FR-A1- 2 768 563
- US-A- 5 700 977

## Beschreibung

Die Erfindung ist auf eine Leitungsverbindungsanordnung für ein Fahrzeugbauteil gerichtet, die ein Trägerelement zur mechanischen Befestigung und elektrischen Verbindung von elektrischen und/oder elektronischen Bauelementen des Fahrzeugbauteils und wenigstens eine elektrische Leitung aufweist, wobei ein erstes Längsende der wenigstens einen elektrischen Leitung auf dem Trägerelement befestigt ist, wobei die wenigstens eine elektrische Leitung in einem Kabelkanal geführt untergebracht ist und deren erstes Längsende aus einem ersten Längsende des Kabelkanals herausragt und wobei die Leitungsverbindungsanordnung ein Zugkraft-Druckkraft-Entlastungselement, an dem mit Hilfe einer kraftschlüssigen Verbindung das erste Längsende des Kabelkanals eingeklemmt befestigt ist, und ein eine Bewegung des Zugkraft-Druckkraft-Entlastungselements in Zug- und Druckkraftrichtung des ersten Längsendes des Kabelkanals blockierendes Blockadeelement umfasst.

Eine Leitungsverbindungsanordnung ist allgemein bekannt. Eine solche Leitungsverbindungsanordnung wird beispielsweise bei einem Fahrzeugbauteil eines Kraftfahrzeugs bei einer elektrischen Lenkverriegelung, einem Heckschloss oder einem Türschloss eingesetzt. Bei einer derartigen Leitungsverbindungsanordnung sind an einer als Trägerelement bestimmten Leiterplatte mehrere elektrische Leitungen angebracht, die bei der Montage mit einer fahrzeugseitigen Spannungsversorgung und/oder Steuereinrichtung verbunden bzw. gekoppelt werden. Dabei sind die ersten Längsenden der elektrischen Leitungen auf der Leiterplatte angelötet oder verpresst, wohingegen die zweiten Längsenden der elektrischen Leitungen üblicherweise an einem Steckerblock angebracht sind, so dass über den Steckerblock die fahrzeugseitige Verbindung auf einfache Weise hergestellt wird. Allerdings besteht während der Montage einer solchen Leitungsverbindungsanordnung die Gefahr, dass der Monteur derart kräftig an dem Steckerblock zieht, dass die ersten Längsenden der elektrischen Leitungen aus dem Trägerelement gerissen werden können. Unabhängig davon birgt auch die lose Anordnung der elektrischen Leitungen stets die Gefahr, dass versehentlich eine der elektrischen Leitungen von dem Trägerelement gelöst wird. Ferner besteht bei bekannten Leitungsverbindungsanordnungen die Gefahr, dass diese während der Montage beschädigt werden, was zum Beispiel bei einer Lötstelle, die empfindlich ausgebildet ist und dementsprechend nur einer geringen Kraftbeaufschlagung standhält, zu Rissbildung führt.

Eine Leitungsverbindungsanordnung der eingangs genannten Art ist zum Beispiel aus der EP 2 020 701 A1 bekannt.

Der Erfindung liegt die Aufgabe zugrunde eine Lösung zu schaffen, die auf konstruktiv einfache Weise eine verbesserte Leitungsverbindungsanordnung bereitstellt, die ein hohes Maß an Funktionssicherheit gewährleistet. Insbesondere soll durch die Erfindung eine Leitungsverbindungsanordnung geschaffen werden, bei welcher auf effiziente Art verhindert wird, dass bei der Montage versehentlich eine elektrische Leitung von dem Trägerelement getrennt wird.

Bei einer Leitungsverbindungsanordnung der eingangs bezeichneten Art wird die Aufgabe erfindungsgemäß dadurch gelöst, dass das Zugkraft-Druckkraft-Entlastungselement an dem Trägerelement angebracht ist.

Vorteilhafte und zweckmäßige Ausgestaltungen und Weiterbildungen der Erfindung ergeben sich aus den Unteransprüchen.

Durch die Erfindung wird eine Leitungsverbindungsanordnung für ein Fahrzeugbauteil zur Verfügung gestellt, welche sich durch eine einfache, kompakte und preisgünstige Bauweise auszeichnet und darüber hinaus ein hohes Maß an Funktionssicherheit garantiert. Der Kabelkanal reicht bis zu dem am Trägerelement befestigten Zugkraft-Druckkraft-Entlastungselement und ist mit seinem ersten Längsende an diesem angebracht, wobei das aus dem ersten Längsende des Kabelkanals herausragende Längsende der wenigstens einen elektrischen Leitung an dem Trägerelement angebracht ist. Bei der Leitung kann es sich im Sinne der Erfindung um ein Kabel mit einem ein- oder mehradrigen Verbund von Adern handeln. Es können auch mehrere elektrische Leitungen vorgesehen sein, so dass der Kabelkanal aufgrund der Bündelung der elektrischen Leitungen für eine einheitliche Führung der elektrischen Leitungen sorgt, wobei zusätzlich die elektrischen Leitungen durch den Kabelkanal geschützt untergebracht sind. Dadurch, dass das erste Längsende des Kabelkanals eingeklemmt befestigt ist, ist auch die wenigstens eine, im Kabelkanal geführte elektrische Leitung an dem Zugkraft-Druckkraft-Entlastungselement eingeklemmt, so dass ein versehentliches Lösen oder Herausreißen des an dem Trägerelement befestigten Längsendes der wenigstens einen elektrischen Leitung wirkungsvoll verhindert ist. Durch das Blockadeelement wird eine Bewegung des Kabelkanals, der an dem Zugkraft-Druckkraft-Entlastungselement eingeklemmt fixiert ist, wirksam verhindert, indem das Blockadeelement mit dem Zugkraft-Druckkraft-Entlastungselement formschlüssig verbunden ist. Somit wird durch die vorliegende Erfindung mit Hilfe der Leitungsverbindungsanordnung eine lose Kabelführung bzw. lose Führung einzelner elektrischer Leitungen vermieden. Dabei wirkt der Kabelkanal nicht nur als Führung, sondern auch als elektrische und/oder magnetische Abschirmung der wenigstens einen elektrischen Leitung gegenüber der Umgebung und umgekehrt, so dass zusätzlich mit der Leitungsverbindungsanordnung gemäß der Erfindung auch die Elektromagnetische Verträglichkeit (EMV) verbessert wird.

Die Erfindung sieht in Ausgestaltung vor, dass zur Blockierung einer Bewegung des Zugkraft-Druckkraft-Entlastungselements in Zug- und Druckkraftrichtung des ersten Längsendes des Kabelkanals das Zugkraft-Druckkraft-Entlastungselement wenigstens eine sich quer zur Zug- und Druckkraftrichtung erstreckende Nut aufweist, in die ein Arretierungssteg des Blockadeelements eingreift. Mit Hilfe dieser Ausgestaltung ist das Zugkraft-Druckkraft-Entlastungselement mit dem Blockadeelement formschlüssig verbunden, wobei der Formschluss eine Bewegung des Kabelkanals in Zug- und Druckkraftrichtung verhindert.

Eine konstruktiv besonders günstige Ausgestaltung der erfindungsgemäßen Leitungsverbindungsanordnung ist in Weiterbildung der Erfindung dadurch gegeben, dass das Zugkraft-Druckkraft-Entlastungselement einen Grundkörper, über welchen das Zugkraft-Druckkraft-Entlastungselement an dem Trägerelement befestigt ist, und ein an dem Grundkörper angeformtes und rinnenförmig ausgebildetes Halteelement, an dem der Kabelkanal befestigt ist, aufweist. Das erste Längsende des Kabelkanals liegt hierbei innerhalb des rinnenförmigen Halteelements und ist dort lagefest fixiert.

Die Erfindung sieht in weiterer Ausgestaltung der Leitungsverbindungsanordnung vor, dass die kraftschlüssige Verbindung von dem rinnenförmig ausgebildeten Halteelement und einem Fixierungselement, welches das erste Längsende des Kabelkanals in das rinnenförmige Haltelement drängt, ausgebildet ist. Das erste Längsende des Kabelkanals ist derart in das rinnenförmige Halteelement gedrückt und gepresst, dass auch die in dem Kabelkanal in diesem Abschnitt angeordneten elektrischen Leitungen fixiert sind.

Zur Realisierung einer orts- bzw. lagefesten Fixierung des ersten Längsendes des Kabelkanals sieht die Erfindung in Ausgestaltung vor, dass das Fixierungselement nach Art eines Kabelbinders ausgebildet ist und sowohl das Halteelement als auch das in dem Halteelement angeordnete erste Längsende des Kabelkanals in das erste Längsende des Kabelkanals in das rinnenförmige Haltelement drängender Weise umgibt. Zur kraftschlüssigen Verbindung ist folglich auch die Druckkraft des Fixierungselements zu berücksichtigen, mit welcher das erste Längsende des Kabelkanals auf das rinnenförmige Halteelement gedrückt wird.

Um die Funktionssicherheit der Leitungsverbindungsanordnung weiter zu erhöhen, sieht die Erfindung in weiterer Ausgestaltung vor, dass das Fixierungselement mit Hilfe einer formschlüssigen Verbindung an dem Halteelement befestigt ist. Auf diese Weise wird die kraft- bzw. reibschlüssige Verbindung gesichert, denn die formschlüssige Verbindung verhindert ein Lösen des Kraftschlusses zwischen Fixierungselement, Halteelement und Kabelkanal.

Zur Realisierung der formschlüssigen Verbindung sieht die Erfindung in vorteilhafter Ausgestaltung vor, dass die formschlüssige Verbindung von dem Fixierungselement und einem kragenförmigen Rand des rinnenförmigen Halteelements gebildet ist, wobei das Fixierungselement zumindest abschnittsweise an dem kragenförmigen Rand des rinnenförmigen Halteelements anliegt. Das Fixierungselement ist zwischen dem Grundkörper des Zugkraft-Druckkraft-Entlastungselements und dem kragenförmigen Rand derart an dem rinnenförmigen Halteelement angebracht, dass es zumindest im montierten Zustand nicht vom Halteelement demontiert werden kann. Mit anderen Worten ist das Fixierungselement zwischen dem Grundkörper und dem kragenförmigen Rand des Halteelements derart angeordnet, dass ein Abgleiten des Fixierungselements von dem Halteelement verhindert ist.

Um die Anzahl der für die erfindungsgemäße Leitungsverbindungsanordnung notwendigen Bauteile gering zu halten, ist es von Vorteil, wenn das Fixierungselement ein das Trägerelement aufnehmendes Gehäuseelement ist. Auf diese Weise werden zwei Aufgaben von einem Bauteil übernommen, indem das Gehäuseelement einerseits das Zugkraft-Druckkraft-Entlastungselement fixiert und andererseits das Trägerelement beherbergt.

Zur Verbesserung der Elektromagnetischen Verträglichkeit (EMV) sieht die Erfindung in konkreter Ausgestaltung vor, dass der Kabelkanal flexibel ausgebildet ist und ein die elektrischen Leitungen elektrisch und/oder magnetisch abschirmendes Material aufweist. Auf diese Weise sind die elektrischen Leitungen gegenüber der Umgebung und die Umgebung gegenüber den elektrischen Leitungen geschützt.

Hinsichtlich einer kompakten Leitungsverbindungsanordnung ist es von Vorteil, wenn das Trägerelement eine Leiterplatte ist und das erste Längsende der wenigstens einen elektrischen Leitung auf dem Trägerelement verlötet oder verpresst ist.

Die Erfindung sieht in weiterer Ausgestaltung vor, dass das zweite Längsende der wenigstens einen elektrischen Leitung, das aus dem zweiten Längsende des Kabelkanals herausragt, an einem zur mechanischen und/oder elektrischen Verbindung dienenden Steckerblock fixiert ist. Der Steuerblock ist mit einer fahrzeugseitigen Steckeraufnahme verbindbar, über die wenigstens eine elektrische Verbindung realisiert wird.

Schließlich ist es von besonderem Vorteil, wenn das Trägerelement innerhalb eines zweiteiligen Gehäuses angeordnet ist, an dessen Außenseite wenigstens ein elastischer Arm angeformt ist, der einen außen am Gehäuse geführten Abschnitt des Kabelkanals fixiert. Auf diese Weise wird eine lose Kabelführung vermieden.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 eine perspektivische Ansicht auf eine Leitungsverbindungsanordnung für ein Fahrzeugbauteil,
Figur 2 eine erste Einzelteildarstellung der Leitungsverbindungsanordnung aus Figur 1,
Figur 3 in perspektivischer Ansicht die erfindungsgemäße Leitungsverbindungsanordnung ohne Gehäuse,
Figur 4 in einer anderen perspektivischen Ansicht die Leitungsverbindungsanordnung aus Figur 3,
Figur 5 in Perspektivansicht eine Einzelteildarstellung der Leitungsverbindungsanordnung aus Figur 1,
Figur 6 in einer perspektivischen Ansicht die Leitungsverbindungsanordnung im demontierten Zustand,
Figur 7 in einer perspektivischen Ansicht ein Halteelement und einen am Halteelement angeordneten Kabelkanal der Leitungsverbindungsanordnung,
Figur 8 in perspektivischer Ansicht den an dem Halteelement mit Hilfe eines Fixierungselements befestigten Kabelkanal,
Figur 9 in perspektivischer Ansicht ein mit dem Halteelement in Eingriff gebrachtes Gehäuseelement und
Figur 10 in perspektivischer Ansicht ein Deckelelement, welches mit dem in Figur 9 gezeigten Gehäuseelement zusammenwirkt.

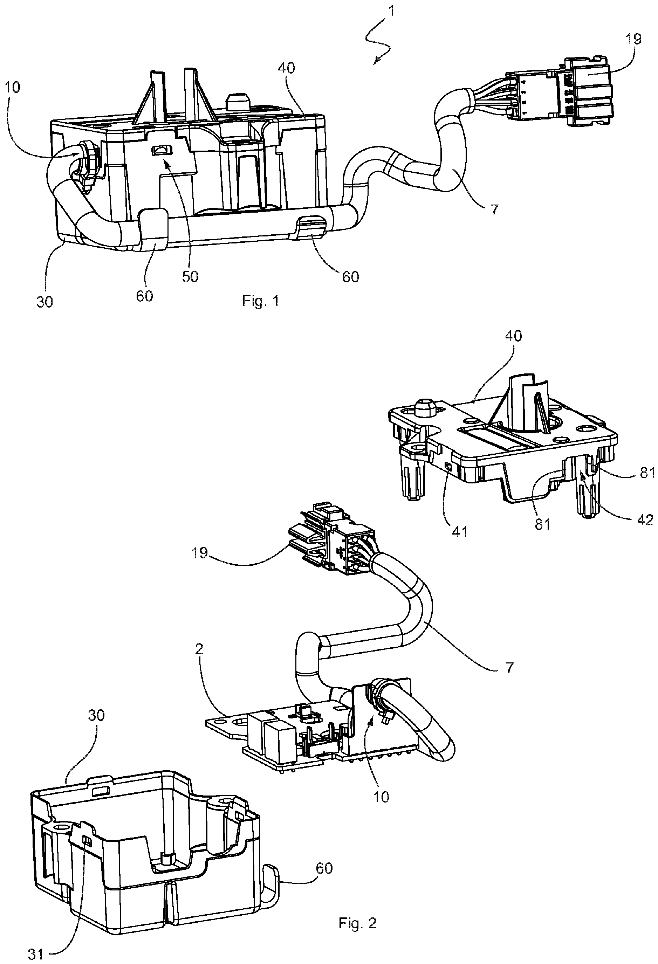

In Figur 1 ist in perspektivischer Ansicht eine Leitungsverbindungsanordnung 1 eines Fahrzeugbauteils im zusammengebauten Zustand dargestellt, wohingegen in Figur 2 die Leitungsverbindungsanordnung 1 in einer Explosionsdarstellung gezeigt ist, bei der ein Deckelelement 30 von einem Gehäuseelement 40 der Leitungsverbindungsanordnung 1 demontiert ist und dadurch der Blick auf dasjenige freigegeben ist, welches innerhalb des Deckelelements 30 und des Gehäuseelements 40 untergebracht ist. Das Deckelelement 30 ist auf das Gehäuseelement 40 aufsteckbar bzw. das Gehäuseelement 40 kann in das Deckelelement 30 eingeschoben/eingesteckt werden, wobei zur Fixierung des Deckelelements 30 an dem Gehäuseelement 40 mehrere Rastverbindungen 50 (siehe zum Beispiel Figur 1) vorgesehen sind, die von Rastausnehmungen 31 in dem Deckelelement 30 und von in die Rastausnehmungen 31 eingreifenden Rastnasen 41 des Gehäuseelements 40 gebildet sind (siehe zum Beispiel Figur 2).

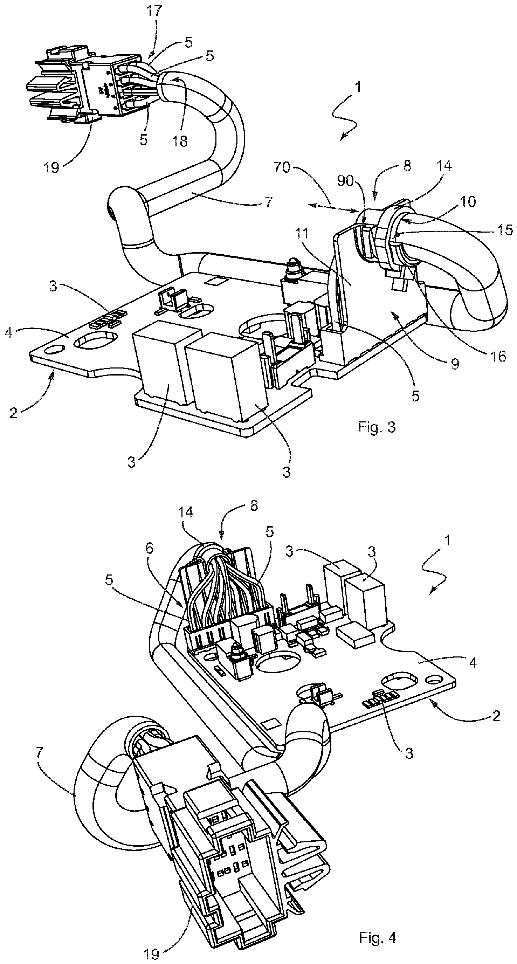

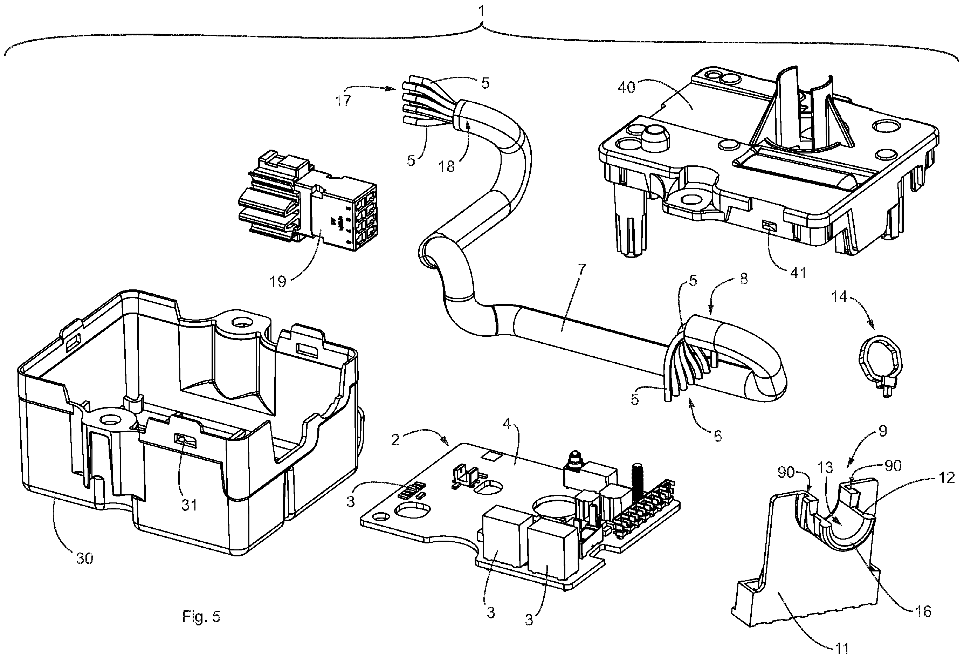

In den Figuren 3 und 4 sind weitere für die Erfindung wesentliche Teile der Leitungsverbindungsanordnung 1 für ein Fahrzeugbauteil in zusätzlichen perspektivischen Ansichten dargestellt, wohingegen Figur 5 eine Einzelteildarstellung der erfindungsgemäßen Leitungsverbindungsanordnung 1 zeigt. Die Leitungsverbindungsanordnung 1 ist - wie vorstehend bereits erwähnt - für ein Fahrzeugbauteil eines Kraftfahrzeugs bestimmt, wobei die Figuren eine Leitungsverbindungsanordnung 1 für eine elektrische Lenkverriegelung zeigen. Alternativ könnte die dargestellte Leitungsverbindungsanordnung 1 auch für ein Heckschloss oder ein Türschloss oder auch für ein Steuergerät eines Kraftfahrzeugs bestimmt sein.

Die Leitungsverbindungsanordnung 1 eines Fahrzeugbauteils weist ein von dem Deckelelement 30 und dem Gehäuseelement 40 aufgenommenes Trägerelement 2 auf, welches zur mechanischen Befestigung und elektrischen Verbindung von elektrischen und/oder elektronischen Bauelementen 3 des Fahrzeugbauteils dient. Die Bauelemente 3, von denen nur einige exemplarisch in Figur 3 mit dem Bezugszeichen 3 versehen sind, sind Bausteine der Elektronik bzw. Steuerelektronik und/oder Sensorik der im vorliegenden Fall elektrischen Lenkverriegelung und daher grundsätzlich bekannt, so dass von einer näheren Beschreibung dieser Bauelemente 3 abgesehen wird. Das Trägerelement 2 ist gemäß den Figuren 2 bis 9 als eine Leiterplatte 4 ausgebildet, auf der die Bauelemente 3 angebracht sind. Alternativ kann das Trägerelement 2 auch als einfaches plattenförmiges Element (im Gegensatz zu einer Leiterplatte dann ohne integrierte Leiterbahnen) ausgebildet sein.

Ferner umfasst die Leitungsverbindungsanordnung 1 mehrere elektrische Leitungen 5, wobei auch nur eine einzige elektrische Leitung 5 alternativ vorgesehen sein kann. Ein jeweiliges erstes Längsende 6 der elektrischen Leitungen 5 ist an und auf dem Trägerelement 2 bzw. der Leiterplatte 4 befestigt. Die elektrischen Leitungen 5 können auf dem Trägerelement 2 durch Löten oder Verpressen fixiert werden. Wie den Figuren 1 bis 10 zu entnehmen ist, umfasst die Leitungsverbindungsanordnung 1 ferner einen Kabelkanal 7, durch den die elektrischen Leitungen 5 hindurch geführt und untergebracht sind. Dabei ragen die ersten Längsenden 6 der elektrischen Leitungen 5, die auf dem Trägerelement 2 befestigt sind, aus einem ersten Längsende 8 des Kabelkanals 7 heraus, um auf dem Trägerelement 2 befestigt werden zu können.

Dementsprechend sind nur die elektrischen Leitungen 5 auf dem Trägerelement 2 direkt befestigt, wohingegen der Kabelkanal 7 an einem zu der Leitungsverbindungsanordnung 1 zu zählenden Zugkraft-Druckkraft-Entlastungselement 9 der Leitungsverbindungsanordnung 1 befestigt ist. Das Zugkraft-Druckkraft-Entlastungselement 9 wiederum ist auf dem Trägerelement 2 mechanisch angebracht, so dass insgesamt der Kabelkanal 7 indirekt über das Zugkraft-Druckkraft-Entlastungselement 9 an dem Trägerelement 2 fixiert ist.

Der Kabelkanal 7, der mit Bezug auf Figur 1 außen an dem von Deckelelement 30 und Gehäuseelement 40 gebildeten Gehäuse geführt ist, ist mit Hilfe elastischer Arme 60 an der Außenseite des Gehäuses abschnittsweise fixiert.

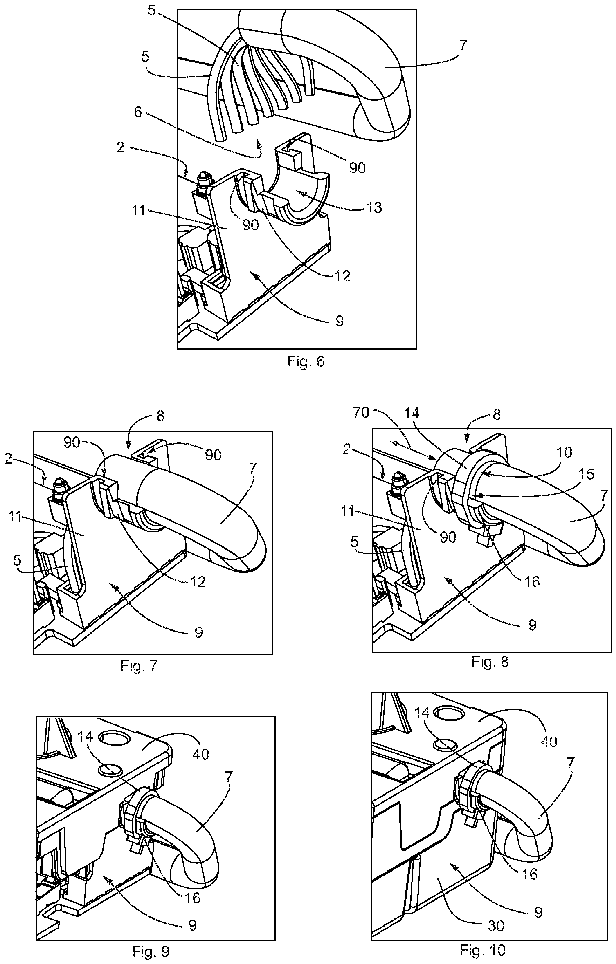

Zur Befestigung des ersten Längsendes 8 des Kabelkanals 7 an dem Zugkraft-Druckkraft-Entlastungselement 9 ist eine kraftschlüssige Verbindung 10 (siehe zum Beispiel Figur 1 oder 6) vorgesehen, durch die das erste Längsende 8 eingeklemmt an dem Zugkraft-Druckkraft-Entlastungselement 9 fixiert ist. Die kraftschlüssige Verbindung 10 wird nachstehend noch näher im Detail beschrieben werden. Zuvor sei erwähnt, dass das Zugkraft-Druckkraft-Entlastungselement 9 einen Grundkörper 11 und ein Halteelement 12 umfasst (siehe zum Beispiel Figur 3). Der Grundkörper 11 ist als plattenförmiges Element ausgebildet, welches mit einem Rand auf dem Trägerelement 2 befestigt ist und sich von dem Trägerelement 2 nahezu senkrecht erstreckt. Im Bereich seines oberen freien Randes weist der Grundkörper 11 des Zugkraft-Druckkraft-Entlastungselements 9 das Halteelement 12 auf, welches sich wiederum senkrecht von dem Grundkörper 11 und im Wesentlichen parallel zum Trägerelement 2 bzw. zur Leiterplatte 4 erstreckt und rinnenförmig bzw. mit einer Rinne 13 ausgebildet ist, wobei in dem dargestellten Ausführungsbeispiel die offene Seite der Rinne 13 des Halteelements 12 nach oben und von dem Trägerelement 2 weg gerichtet ist. Selbstverständlich muss sich der Grundkörper 11 nicht senkrecht von dem Trägerelement 2 aus erstrecken und auch das Halteelement 12 muss sich nicht senkrecht vom Grundkörper 11 und parallel zum Trägerelement 2 erstrecken. Diese Anordnung der Bauteile zueinander ist nur für das in den Figuren dargestellte Ausführungsbeispiel gewählt und kann bei anderen Anwendungsfällen davon abweichen. Wichtig im Sinne der Erfindung ist, dass das Zugkraft-Druckkraft-Entlastungselement 9 den Grundkörper 11, über welchen das Zugkraft-Druckkraft-Entlastungselement 9 an dem Trägerelement 2 befestigt ist, und das an dem Grundkörper 11 angeformte und rinnenförmig ausgebildete Halteelement 12, an dem der Kabelkanal 7 mit den darin geführten elektrischen Leitungen 5 befestigt ist, umfasst.

Die Leitungsverbindungsanordnung 1 umfasst ferner ein Fixierungselement 14, welches zusammen mit dem rinnenförmig ausgebildeten Halteelement 12 die kraftschlüssige Verbindung 10 der Leitungsverbindungsanordnung 1 ausbildet. Zur Realisierung der kraftschlüssigen Verbindung 10 drängt das Fixierungselement 14 das erste Längsende 8 des Kabelkanals 7 in die Rinne 13 des Halteelements 12 hinein, wie beispielsweise aus den Figuren 4 bis 6 ersichtlich ist, die eine Art Montageablauf des Zugkraft-Druckkraft-Entlastungselements 9 an dem Trägerelement 2 zeigen. Denn bei Montage wird zunächst (Figur 4) das erste Längsende 8 des Kabelkanals 7 in die Rinne 13 des Halteelements 12 gelegt (Figur 5), bevor das Fixierungselement 14 das erste Längsende 8 des Kabelkanals 7 in die Rinne 13 drängt und dort fixiert, wobei sich das Fixierungselement 14 dabei an dem Halteelement 12 abstützt, um den Kabelkanal 7 einzuklemmen. Bei der kraftschlüssigen Verbindung 10 umgibt das Fixierungselement 14 sowohl das Halteelement 12 als auch das in der Rinne 13 des Halteelements 12 angeordnete erste Längsende 8 des Kabelkanals 7. Das Fixierungselement 14 nimmt folglich das Halteelement 12 und das erste Längsende 8 des Kabelkanals 7 nach Art einer Schlinge auf und drückt das erste Längsende 8 des Kabelkanals 7 in die formstabile Rinne 13 hinein, so dass das erste Längsende 8 des Kabelkanals 7 und damit die darin verlaufenden elektrischen Leitungen 5 gegen das Halteelement 12 verklemmt werden, wobei das Halteelement 12 bzw. dessen Rinne 13 eine Art Abstützung für das Fixierungselement 14 bereitstellen, um das erste Längsende 8 des Kabelkanals 7 zu verklemmen. Das Fixierungselement 14 ist nach Art eines Kabelbinders ausgebildet. Dabei kann es sich um eine Art Einwegkabelbinder handeln, bei welchem durch eine Verzahnung erreicht wird, dass sich die kraftschlüssige Verbindung 10 nur noch durch Zerstörung (des Fixierungselements 14) öffnen lässt. Alternativ kann das Fixierungselement 14 nach Art eines Mehrwegkabelbinders ausgebildet sein, der durch eine Entriegelung wieder geöffnet und folglich mehrfach verwendet werden kann.

Der Kraft- bzw. Reibschluss durch das Fixierungselement 14, welcher die kraftschlüssige Verbindung 10 definiert und durch den das erste Längsende 8 des Kabelkanals 7 in das rinnenförmige Haltelement 12 gedrängt ist, sorgt für die Fixierung bzw. Befestigung des Kabelkanals 7 an dem Trägerelement 2 über das Zugkraft-Druckkraft-Entlastungselement 9. Allerdings ist dadurch noch nicht das Fixierungselement 14 vollständig vor einem Abgleiten von der Rinne 13 des Halteelements 12 gesichert. Um ein solches Abgleiten zu verhindern, ist das Fixierungselement 14 mit Hilfe einer formschlüssigen Verbindung 15 (siehe zum Beispiel Figur 6) an der Rinne 13 des Halteelements 12 befestigt. Die formschlüssige Verbindung 15 der Leitungsverbindungsanordnung 1 ist von dem Fixierungselement 14 und einem kragenförmigen Rand 16 des rinnenförmigen Halteelements 12 gebildet, wie aus Figur 3 ersichtlich ist, in der das Ausführungsbeispiel der Leitungsverbindungsanordnung 1 gemäß der Erfindung in einer Einzelteildarstellung gezeigt ist. Im montierten bzw. zusammengebauten Zustand der Leitungsverbindungsanordnung 1 liegt das Fixierungselement 14 zumindest abschnittsweise an dem kragenförmigen Rand 16 des rinnenförmigen Halteelements 12 an. Durch diese Anordnung für die formschlüssige Verbindung 15 ist sichergestellt, dass das Fixierungselement 14 zwischen dem Grundkörper 11 und dem kragenförmigen Rand 16 des Halteelements 12 derart angeordnet ist, dass ein Abgleiten des Fixierungselements 14 von dem Halteelement 12 verhindert ist. Dies setzt voraus, dass das Fixierungselement 14 stramm, d.h. ohne Spiel, das Halteelement 12 und das erste Längsende 8 des Kabelkanals 7 umgibt und einschnürt bzw. einklemmt. Denn nur auf diese Weise gelangt das Fixierungselement 14 hinter den kragenförmigen Rand 16 des Halteelements 12 und kann von diesem gegen ein Abgleiten gehindert werden.

Um eine Bewegung des Zugkraft-Druckkraft-Entlastungselements 9 in Zug- und Druckkraftrichtung 70 (siehe zum Beispiel Figur 3 oder 8) des ersten Längsendes 8 des Kabelkanals 7 zu unterbinden, umfasst die Leitungsverbindungsanordnung 1 ein Blockadeelement 80. Genauer gesagt weist das Halteelement 12 des Zugkraft-Druckkraft-Entlastungselements 9 auf gegenüberliegenden Umfangsseiten des rinnenförmigen Halteelements 12 eine jeweilige Nut 90 auf, wie es beispielsweise aus den Figuren 3, 5 und 6 bis 8 ersichtlich ist. In diese jeweiligen Nuten 90 greift ein Blockadesteg 81 ein, der an dem Blockadeelement 80 ausgebildet ist. Das Blockadeelement 80 ist in dem in den Figuren dargestellten Ausführungsbeispiel in Form des Gehäuseelements 40 ausgebildet. In einer der Seitenwandungen des Blockadeelements 80 ist eine Ausnehmung 42 (siehe zum Beispiel Figur 2) ausgebildet, deren sich gegenüberliegende Seiten einen jeweiligen Blockadesteg 81 bilden, der in die entsprechenden Nuten 90 des Zugkraft-Druckkraft-Entlastungselements 9 eingreift.

Es sei noch angemerkt, dass der Kabelkanal 7 flexibel ausgebildet ist. Ferner weist der Kabelkanal 7 ein elektrisch und/oder magnetisch Material auf, was aus den Figuren 1 bis 6 nicht ersichtlich ist und welches die elektrischen Leitungen 5 gegenüber der Umgebung und umgekehrt abschirmt. Der Vollständigkeit halber sei schließlich erwähnt, dass die zweiten Längsenden 17 der elektrischen Leitungen 5, die aus dem zweiten Längsende 18 des Kabelkanals 7 herausragen, an einem zur mechanischen und/oder elektrischen Verbindung dienenden Steckerblock 19 fixiert sind.

Zusammenfassend ist vorstehend eine erfindungsgemäße Leitungsverbindungsanordnung 1 für ein Fahrzeugbauteil, wie zum Beispiel eine elektrische Lenkverriegelung, ein Heckschloss, ein Türschloss oder ein Steuergerät, beschrieben worden. Die erfindungsgemäße Leitungsverbindungsanordnung 1 umfasst das Trägerelement 2 zur mechanischen Befestigung und elektrischen Verbindung von elektrischen und/oder elektronischen Bauelementen 3 des Fahrzeugbauteils und elektrische Leitungen 5, wobei die jeweiligen ersten Längsenden 6 der elektrischen Leitungen 5 auf dem Trägerelement 2 befestigt sind. Die elektrischen Leitungen 5 sind dabei in dem Kabelkanal 7 geführt untergebracht, wobei deren erste Längsenden 6 aus dem ersten Längsende 8 des Kabelkanals 7 herausragen. Mit Hilfe des an dem Trägerelement 2 befestigten Zugkraft-Druckkraft-Entlastungselements 9 ist das erste Längsende 8 des Kabelkanals 7 eingeklemmt befestigt, so dass insgesamt für die in dem Kabelkanal 7 geführten elektrischen Leitungen 5 eine Zugkraftentlastung vorliegt. Die Leitungsverbindungsanordnung 1 umfasst zusätzlich ein eine Bewegung des Zugkraft-Druckkraft-Entlastungselements 9 in Zug- und Druckkraftrichtung 70 des ersten Längsendes 8 des Kabelkanals 7 blockierendes Blockadeelement 80, wobei das Blockadeelement 80 ein Gehäusebauteil sein kann, dessen Wandung entsprechend den Nuten 90 des Zugkraft-Druckkraft-Entlastungselements 9 ausgebildete Blockadestege 81 aufweist, die in die Nuten 90 eingreifen und dadurch eine formschlüssige Verbindung herstellen, durch die eine Bewegung des des Zugkraft-Druckkraft-Entlastungselements 9 in Zug- und Druckkraftrichtung 70 des ersten Längsendes 8 des Kabelkanals 7 blockiert ist. Das Blockadeelement 80 muss nicht zwangsläufig das Gehäuseelement 40 sein - dies bietet sich jedoch an, um die Anzahl der Bauteile gering zu halten.

Alternativ ist die Erfindung auf ein Fahrzeugbauteil gerichtet, welches die vorstehend beschriebene Leitungsverbindungsanordnung 1 aufweist. Das in Figur 1 gezeigte Fahrzeugbauteil, welches hier eine Lenkverriegelung ist, umfasst das Trägerelement 2 und elektrische Leitungen 5, wobei die jeweiligen ersten Längsenden 6 der elektrischen Leitungen 5 auf dem Trägerelement 2 befestigt sind und die elektrischen Leitungen 5 in dem Kabelkanal 7 geführt untergebracht sind. Mittels des Zugkraft-Druckkraft-Entlastungselements 9 ist das erste Längsende 8 des Kabelkanals 7 eingeklemmt befestigt. Zur Blockierung einer Bewegung des Zugkraft-Druckkraft-Entlastungselements 9 in Zug- und Druckkraftrichtung 70 des ersten Längsendes 8 des Kabelkanals 7 ist das Blockadeelement 80 vorgesehen, welches entsprechend den Nuten 90 des Zugkraft-Druckkraft-Entlastungselements 9 ausgebildete Blockadestege 81 aufweist, die in die Nuten 90 eingreifen, was letztlich die blockierende Wirkung erzielt.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Leitungsverbindungsanordnung (1) für ein Fahrzeugbauteil, die ein Trägerelement (2) zur mechanischen Befestigung und elektrischen Verbindung von elektrischen und/oder elektronischen Bauelementen (3) des Fahrzeugbauteils und wenigstens eine elektrische Leitung (5) aufweist, wobei ein erstes Längsende (6) der wenigstens einen elektrischen Leitung (5) auf dem Trägerelement (2) befestigt ist,
wobei die wenigstens eine elektrische Leitung (5) in einem Kabelkanal (7) geführt untergebracht ist und deren erstes Längsende (6) aus einem ersten Längsende (8) des Kabelkanals (7) herausragt und
wobei die Leitungsverbindungsanordnung (1) ein Zugkraft-Druckkraft-Entlastungselement (9), an dem mit Hilfe einer kraftschlüssigen Verbindung (10) das erste Längsende (8) des Kabelkanals (7) eingeklemmt befestigt ist, und ein eine Bewegung des Zugkraft-Druckkraft-Entlastungselements (9) in Zug- und Druckkraftrichtung (70) des ersten Längsendes (8) des Kabelkanals (7) blockierendes Blockadeelement (80) umfasst,
**dadurch gekennzeichnet, dass**
das Zugkraft-Druckkraft-Entlastungselement (9) an dem Trägerelement (2) angebracht ist.

2. Leitungsverbindungsanordnung (1) nach Anspruch 1,
**dadurch gekennzeichnet, dass** zur Blockierung einer Bewegung des Zugkraft-Druckkraft-Entlastungselements (9) in Zug- und Druckkraftrichtung (70) des ersten Längsendes (8) des Kabelkanals (7) das Zugkraft-Druckkraft-Entlastungselement (9) wenigstens eine sich quer zur Zug- und Druckkraftrichtung (70) erstreckende Nut (90) aufweist, in die ein Blockadesteg (81) des Blockadeelements (80) eingreift.

3. Leitungsverbindungsanordnung (1) nach Anspruch 1 oder 2, **dadurch gekennzeichnet, dass** das Zugkraft-Druckkraft-Entlastungselement (9) einen Grundkörper (11), über welchen das Zugkraft-Druckkraft-Entlastungselement (9) an dem Trägerelement (2) befestigt ist, und ein an dem Grundkörper (11) angeformtes und rinnenförmig ausgebildetes Halteelement (12), an dem der Kabelkanal (7) befestigt ist, aufweist.

4. Leitungsverbindungsanordnung (1) nach Anspruch 3,
**dadurch gekennzeichnet, dass** die kraftschlüssige Verbindung (10) von dem rinnenförmig ausgebildeten Halteelement (12) und einem Fixierungselement (14), welches das erste Längsende (8) des Kabelkanals (7) in das rinnenförmige Haltelement (12) drängt, ausgebildet ist.

5. Leitungsverbindungsanordnung (1) nach Anspruch 4,
**dadurch gekennzeichnet, dass** das Fixierungselement (14) nach Art eines Kabelbinders ausgebildet ist und sowohl das Halteelement (12) als auch das in dem Halteelement (12) angeordnete erste Längsende (8) des Kabelkanals (7) in das erste Längsende (8) des Kabelkanals (7) in das rinnenförmige Haltelement (12) drängender Weise umgibt.

6. Leitungsverbindungsanordnung (1) nach Anspruch 4 oder 5, **dadurch gekennzeichnet, dass** das Fixierungselement (14) mit Hilfe einer formschlüssigen Verbindung (15) an dem Halteelement (12) befestigt ist.

7. Leitungsverbindungsanordnung (1) nach Anspruch 6,
**dadurch gekennzeichnet, dass** die formschlüssige Verbindung (15) von dem Fixierungselement (14) und einem kragenförmigen Rand (16) des rinnenförmigen Halteelements (12) gebildet ist, wobei das Fixierungselement (14) zumindest abschnittsweise an dem kragenförmigen Rand (16) des rinnenförmigen Halteelements (12) anliegt.

8. Leitungsverbindungsanordnung (1) nach Anspruch 7,
**dadurch gekennzeichnet, dass** das Fixierungselement (14) zwischen dem Grundkörper (11) und dem kragenförmigen Rand (16) des Halteelements (12) derart angeordnet ist, dass ein Abgleiten des Fixierungselements (14) von dem Halteelement (12) verhindert ist.

9. Leitungsverbindungsanordnung (1) nach einem der vorhergehenden Ansprüche, **dadurch gekennzeichnet, dass** das Blockadeelement (80) als ein das Trägerelement (2) aufnehmendes Gehäuseelement (41) ausgebildet ist.

10. Leitungsverbindungsanordnung (1) nach einem der vorhergehenden Ansprüche, **dadurch gekennzeichnet, dass** der Kabelkanal (7) flexibel ausgebildet ist und ein die wenigstens eine elektrische Leitung (5) elektrisch und/oder magnetisch abschirmendes Material aufweist.

11. Leitungsverbindungsanordnung (1) nach einem der vorhergehenden Ansprüche, **dadurch gekennzeichnet, dass** das Trägerelement (2) eine Leiterplatte (4) ist und die wenigstens eine elektrische Leitung (5) auf dem Trägerelement (2) verlötet oder verpresst ist.

12. Leitungsverbindungsanordnung (1) nach einem der vorhergehenden Ansprüche, **dadurch gekennzeichnet, dass** das zweite Längsende (17) der wenigstens einen elektrischen Leitung (5), das aus dem zweiten Längsende (18) des Kabelkanals (7) herausragt, an einem zur mechanischen und/oder elektrischen Verbindung dienenden Steckerblock (19) fixiert ist.

13. Leitungsverbindungsanordnung (1) nach einem der vorhergehenden Ansprüche, **dadurch gekennzeichnet, dass** das Trägerelement (2) innerhalb eines zweiteiligen Gehäuses (31, 41) angeordnet ist, an dessen Außenseite wenigstens ein elastischer Arm (60) angeformt ist, der einen außen am Gehäuse (31, 41) geführten Abschnitt des Kabelkanals (7) fixiert.

## Claims

1. Line connection assembly (1) for a vehicle component, including a carrier element (2) for mechanical attachment and electrical connection of electrical and/or electronic parts (3) of the vehicle component and at least one electrical line (5), wherein a first longitudinal end (6) of the at least one electric line (5) is fastened on the carrier element (2),
wherein the at least one electric line (5) is accommodated for routing in a cable duct (7) and the first longitudinal end (6) thereof protrudes from a first longitudinal end (8) of the cable duct (7) and
wherein the line connection assembly (1) comprises a push-pull pressure unloading element (9) to which the first longitudinal end (8) of the cable duct (7) is attached by clamping with the aid of a force-fitting connection (10), and a blocking element (80) which blocks a movement of the push-pull pressure unloading element (9) in the pulling and pushing direction (70) of the first longitudinal end (8) of the cable duct (7)
**characterised in that**
the push-pull pressure unloading element (9) is attached to the carrier element (2).

2. Line connection assembly (1) according to claim 1,
**characterised in that** in order to block a movement of the push-pull pressure unloading element (9) in the pulling and pushing direction (70) of the first longitudinal end (8) of the cable duct (7), the push-pull pressure unloading element (9) has at least one groove (90) extending transversely to the pulling and pushing direction (70), in which a blocking lug (81) of the blocking element (80) engages.

3. Line connection assembly (1) according to claim 1 or 2,
**characterised in that** the push-pull pressure unloading element (9) has a base body (11) via which the push-pull pressure unloading element (9) is attached to the carrier element (2), and a half-pipe shaped holding element (12) conformed on the base body (11), to which the cable duct (7) is attached.

4. Line connection assembly (1) according to claim 3,
**characterised in that** the force-fitting connection (10) is formed by the half-pipe shaped holding element (12) and a fixing element (14) which presses the first longitudinal end (8) of the cable duct (7) into the half-pipe shaped holding element (12).

5. Line connection assembly (1) according to claim 4,
**characterised in that** the fixing element (14) is constructed in the manner of a cable tie, and surrounds both the holding element (12) and the first longitudinal end (8) of the cable duct (7) located in the holding element (12) in such manner as to press the first longitudinal end (8) of the cable duct (7) into the half-pipe shaped holding element (12).

6. Line connection assembly (1) according to claim 4 or 5,
**characterised in that** the fixing element (14) is attached to the holding element (12) with the aid of a form-fitting connection (15).

7. Line connection assembly (1) according to claim 6,
**characterised in that** the form-fitting connection (15) is formed by the fixing element (14) and a collar-like rim (16) of the half-pipe shaped holding element (12), wherein the fixing element (14) lies at least partially flush with the collar-like rim (16) of the half-pipe shaped holding element (12).

8. Line connection assembly (1) according to claim 7,
**characterised in that** the fixing element (14) is arranged between the base body (11) and the collar-like rim (16) of the holding element (12) in such manner that it is impossible for the fixing element (14) to slide off the holding element (12).

9. Line connection assembly (1) according to any one of the preceding claims, **characterised in that** the blocking element (80) is constructed as a housing element (41) that houses the carrier element (2).

10. Line connection assembly (1) according to any one of the preceding claims, **characterised in that** the cable duct (7) is constructed flexibly, and includes a material that shields the at least one electrical line (5) electrically and/or magnetically.

11. Line connection assembly (1) according to any one of the preceding claims, **characterised in that** the carrier element (2) is a circuit board (4), and the at least one electrical line (5) is soldered or pressed onto the carrier element (2).

12. Line connection assembly (1) according to any one of the preceding claims, **characterised in that** the second longitudinal end (17) of the at least one electrical line (5), which protrudes from the second longitudinal end (18) of the cable duct (7) is fixed to a connector block (19) which serves to create the mechanical and/or electrical connection.

13. Line connection assembly (1) according to any one of the preceding claims, **characterised in that** the carrier element (2) is disposed inside a two-piece housing (31, 41), on the outside of which at least one elastic arm (60) is conformed, which arm fastens a section of the cable duct (7) which is routed on the outside of the housing (31, 41).

## Revendications

1. Dispositif de connexion de lignes (1) pour un élément constitutif d'un véhicule, qui comporte un élément porteur (2) pour la fixation mécanique et la connexion électrique de composants (3) électriques et/ou électroniques de l'élément constitutif du véhicule et au moins une ligne électrique (5), une première extrémité longitudinale (6) de l'au moins une ligne électrique (5) étant fixée sur l'élément porteur (2),
l'au moins une ligne électrique (5) étant logée en étant guidée dans un caniveau électrique (7) et la première extrémité longitudinale (6) de celle-ci saillant hors d'une première extrémité longitudinale (8) du caniveau électrique (7) et
le dispositif de connexion de ligne (1) comprenant un élément de décharge (9) de l'effort de traction/de l'effort de pression sur lequel à l'aide d'une connexion (10) par complémentarité de force, la première extrémité longitudinale (8) du caniveau électrique (7) est fixée en étant coincée et un élément de blocage (80) bloquant un déplacement de l'élément de décharge (9) de l'effort de traction/ de l'effort de pression dans la direction de l'effort de traction et de l'effort de pression (70) de la première extrémité longitudinale (8) du caniveau électrique (7),
**caractérisé en ce que**
l'élément de décharge (9) de l'effort de traction/de l'effort de pression est monté sur l'élément porteur (2) .

2. Dispositif de connexion de lignes (1) selon la revendication 1,
**caractérisé en ce que** pour bloquer un déplacement de l'élément de décharge (9) de l'effort de traction/de l'effort de pression dans la direction (70) de l'effort de traction/de l'effort de pression de la première extrémité longitudinale (8) du caniveau électronique (7), l'élément de décharge (9) de l'effort de traction/de l'effort de pression comporte au moins une rainure (90) s'étendant à la transversale de la direction (70) de l'effort de traction/de l'effort de pression dans laquelle s'engage une barrette de blocage (81) de l'élément de blocage (80).

3. Dispositif de connexion de lignes (1) selon la revendication 1 ou la revendication 2, **caractérisé en ce que** l'élément de décharge (9) de l'effort de traction/de l'effort de pression comporte un corps de base (11) par l'intermédiaire duquel l'élément de décharge (9) de l'effort de traction/de l'effort de pression est fixé sur l'élément porteur (2) et un élément de retenue (12) conçu en forme de goulotte et moulé sur le corps de base (11), sur lequel est fixé le caniveau électrique (7).

4. Dispositif de connexion de lignes (1) selon la revendication 3, **caractérisé en ce que** la connexion (10) par complémentarité de force est réalisée par l'élément de retenue (12) conçu en forme de goulotte et un élément de fixation (14), lequel force la première extrémité longitudinale (8) du caniveau électrique (7) dans l'élément de retenue (12) en forme de goulotte.

5. Dispositif de connexion de lignes (1) selon la revendication 4, **caractérisé en ce que** l'élément de fixation (14) est réalisé à la manière d'un serre-câbles et entoure aussi bien l'élément de retenue (12) qu'également la première extrémité longitudinale (8) du caniveau électrique (7) placée dans l'élément de retenue (12) en forçant la première extrémité longitudinale (8) du caniveau électrique (7) dans l'élément de retenue (12) en forme de goulotte.

6. Dispositif de connexion de lignes (1) selon la revendication 4 ou la revendication 5, **caractérisé en ce que** l'élément de fixation (14) est fixé sur l'élément de retenue (12) à l'aide d'un assemblage (15) par complémentarité de forme.

7. Dispositif de connexion de lignes (1) selon la revendication 6, **caractérisé en ce que** l'assemblage (15) par complémentarité de forme est formé par l'élément de fixation (14) et un bord (16) en forme de collerette de l'élément de retenue (12) en forme de goulotte, l'élément de fixation (14) étant adjacent au moins par sections au bord (16) en forme de collerette de l'élément de retenue (12) en forme de goulotte.

8. Dispositif de connexion de lignes (1) selon la revendication 7, **caractérisé en ce que** l'élément de fixation (14) est placé entre le corps de base (11) et le bord (16) en forme de collerette de l'élément de retenue (12) de sorte qu'un glissement de l'élément de fixation (14) à partir de l'élément de retenue (12) soit empêché.

9. Dispositif de connexion de lignes (1) selon l'une quelconque des revendications précédentes, **caractérisé en ce que** l'élément de blocage (80) est réalisé en tant qu'un élément formant boîtier (41) recevant l'élément porteur (2).

10. Dispositif de connexion de lignes (1) selon l'une quelconque des revendications précédentes, **caractérisé en ce que** le caniveau électrique (7) est réalisé en étant souple et comporte au moins une matière blindant par moyen électrique et/ou magnétique l'au moins une ligne électrique (5).

11. Dispositif de connexion de lignes (1) selon l'une quelconque des revendications précédentes, **caractérisé en ce que** l'élément porteur (2) est une carte de circuits imprimés (4) et l'au moins une ligne électrique (5) est brasée ou comprimée sur l'élément porteur (2).

12. Dispositif de connexion de lignes (1) selon l'une quelconque des revendications précédentes, **caractérisé en ce que** la deuxième extrémité longitudinale (17) de l'au moins une ligne électrique (5) qui saillit hors de la deuxième extrémité longitudinale (18) du caniveau électrique (7) est fixée sur un bloc de connecteurs (19) servant à la connexion électrique.

13. Dispositif de connexion de lignes (1) selon l'une quelconque des revendications précédentes, **caractérisé en ce que** l'élément porteur (2) est placé à l'intérieur d'un boîtier (31, 41) en deux parties sur la face extérieure duquel est moulé au moins un bras (60) élastique qui fixe un tronçon du caniveau électrique (7) guidé à l'extérieur sur le boîtier (31, 41) .
